# EUROPEAN PATENT APPLICATION

(11) **EP 1 217 417 A1**
(43) Date of publication of application: **26.06.2002**
(21) Application number: 00610137.2
(22) Date of filing: 21.12.2000
(51) Int. Cl.: G02C 5/12

(54) **A pair of spectacles and a resilient nose pad for use therein**

(71) Applicant: F.A. Thiele A/S, 2650 Hvidovre (DK)
(72) Inventor: Thiele, Jens Frederick Anton, 2920 Charlottenlund (DK)
(74) Representative: Raffnsöe, Knud Rosenstand

(57) **Abstract**

A pair of spectacles comprises a pair of lenses (1, 2) engaged along an edge part by at least one frame member (4, 5) of a wire material engaging an edge part of each of the lenses (1, 2), a pair of temple members (9, 10) connected with said frame member by a hinge assembly (11, 12) and and a supporting structure (7) connected with said frame member (4,5) for retaining resilient nose pads (8).

The supporting structure comprises a piece of said wire material including a loop portion (18) for engagement with a shank portion (14) integral with each nose pad. The shank portion (14) is formed with a non-circular cross sectional profile comprising two opposed parallel sides (15, 16), in which tracks (17) are formed for engagement with the wire material of the supporting structure. The loop portion (18) of the supporting structure is formed as a hair-needle bend of said wire material comprising two parallel wire sections (19, 20) defining a clearance matching the distance between the parallel sides (15, 16) of the shank portion (14) and a narrowed introduction passage (21) in communication with said clearance.

## Description

The present invention relates to a pair of spectacles with a pair of lenses and a spectacle frame of wire material comprising at least one frame member engaging an edge part of each of the lenses, a pair of temple members connected with said frame member by a hinge assembly and a supporting structure connected with said frame member for retaining resilient nose pads engaging parts of the users face, said supporting structure comprising a piece of said wire material including a loop part for engagement with a shank portion integral with each nose pad pair.

Moreover, the invention relates to a resilient nose pad for use with such a pair of spectacles.

Spectacles of the kind having frame and temple members made of small diameter light weight metallic wire material such as titanum are known e.g. from EP-B1-0 256 098, EP-B1-0 546 589, US-A-5,518,566, WO 92/08158 and WO 97/23803 and have gained increasing popularity due to their high strength and very low weight and the comfort in use resulting therefrom.

From a design point such spectacle frames are attractive by offering the possibility of a very discrete framing of eye glass lenses covering a minimum of the users' face, but when made of titanium wire also the possibility of an appealing design due to the ability of titanium wire material to be coloured by an electrical process to meet users individual tastes.

Together with the possibility of making such spectacle frames in a rimless design, where small wire pieces connected with the temple members are fixed in slits or holes formed directly in the lenses, as well as in full-rimmed and half-rimmed versions these design options provide for a relatively wide range of frame designs to meet individual needs and tastes of users.

In the prior art wire-framed spectacles disclosed in the above-mentioned publications the resilient nose pad, which is typically made of silicone rubber or a similar resilient plastic material, has a generally circular form including a likewise circular shank portion with a slightly enlarged head, the shank portion being retained in a circular loop part of the supporting structure.

This configuration causes in practical use the disadvantage of a tendency for the nose pads to become detached from their supporting structures.

In order to remedy this problem it has been suggested in international patent application WO 98/26324 to lock the shank portion with respect to the loop part of wire material by insertion of a peg member into the head end of the shank to form a hard core inside at least part of the shank. The need for an additional peg member would imply, however an additional expense and a complication of the mounting operation for the nose pads apart from the fact that a peg member once inserted into the shank is difficult to remove when there is a need or desire to replace a worn-out nose pad.

On this background, it is the object of the invention to provide a pair of spectacles of the kind defined, in which the nose pads are more safely held by their supporting structures to reduce the risk of detachment in normal daily use, while still preserving a possibility for relatively easy and uncomplicated replacement of a nose pad

According to the invention, a pair of spectacles of the kind defined is characterized in that the shank portion of the nose pad is formed with a non-circular cross sectional profile comprising two opposed parallel sides, in which tracks are formed for engagement with the wire material of the supporting structure, the loop portion of the supporting structure being formed as a hair-needle bend of said wire material comprising two parallel wire sections defining a clearance matching the distance between said parallel sides of the shank portion and a narrowed introduction passage in communication with said clearance.

By this design of the shank portion of the nose pad and the loop portion of the supporting structure the nose pad will be safely retained by the supporting structure against detachment therefrom, while the narrowed introduction passage will allow mounting and dismounting of the nose pad with respect to the supporting structure in a relatively easy and uncomplicated manner.

In a preferred embodiment of the pair of spectacles comprising an upper frame member common to the pair of lenses and forming a nose bridge therebetween and separate lower frame members engaging lower and inner peripheral edges of each lens and being locked with the upper frame member by end pieces of said lower frame members being bent around said upper frame member at said nose bridge, the supporting structure for each nose pad is formed by the end piece of a lower frame member.

Further preferred and advantageous embodiments of the pair of spectacles are stated in dependent claims 3 and 4.

The invention further relates to a resilient nose pad including an integral shank portion for use on the pair of spectacles as defined above and being characterized in that the shank portion of the nose pad is formed with a non-circular cross sectional profile comprising two opposed parallel sides, in which tracks are formed for engagement with the wire material of a nose pad supporting structure of the spectacle frame.

In the following the invention will be described in more detail by way of a preferred although non-limiting embodiment as shown in the accompanying drawings, in which
figs. 1, 2 and 3 are a top plan view, a front plan view and a side plan view, respectively, of a pair of spectacles embodying the invention,
fig. 4 is an enlarged section of fig. 3 illustrating an embodiment of the nose pad and its supporting structure,
fig. 5 is a cross-sectional view of the nose pad in fig. 4.

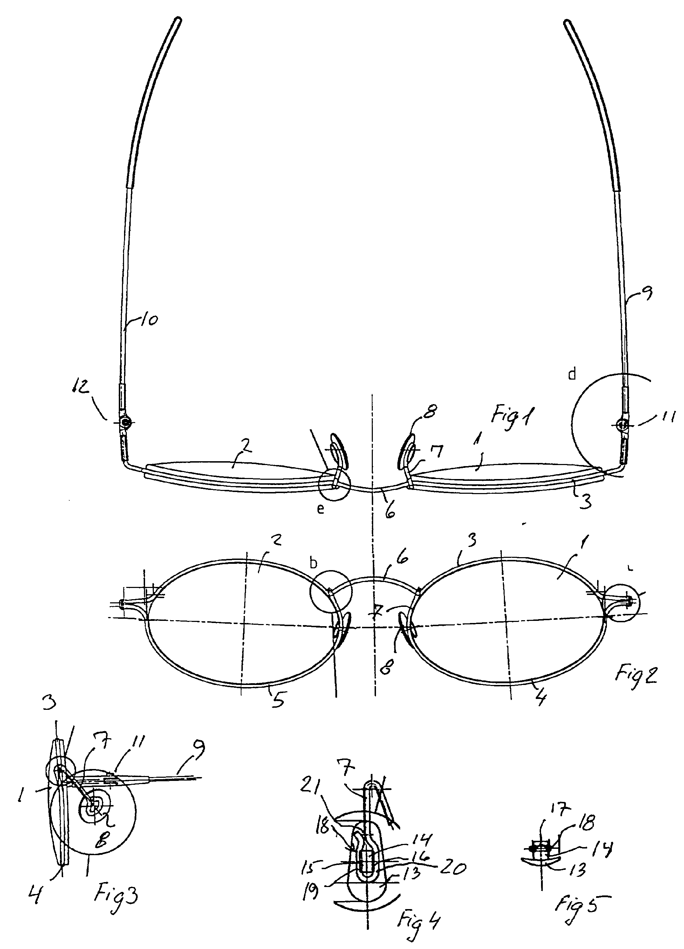

In the full-rimmed spectacle design illustrated by way of embodiment in figs. 1 to 3 each of a pair of eye glass lenses 1 and 2 is engaged along its upper and lower peripheral edges by an upper lens engaging frame member 3 and a lower second lens engaging frame member 4 or 5, respectively, which are made from stiff, high strength and light-weight wire material, preferably titanium or a titanium alloy.

Between lenses 1 and 2 the upper frame member 3 , which is common to the two lenses, is bent into a curved shape to provide a nose bridge 6. Each of the lower frame members 4 and 5, which are formed by separate wire pieces for each of lenses 1 and 2 engages not only the lower peripheral edge of the respective lens 1 or 2, but also the inner side peripheral edge thereof up to the nose bridge 6, at which a free end of each lower frame member 4,5 is bent around the upper frame member 3 to provide locking of frame members 4 and 5 with frame member 3 for a stable full-rimmed framing of lenses 1 and 2. This mutual locking of the frame members 3 to 5 is made relatively easily detachable, however by use of an appropriate tool to allow for dismounting of the framing of lenses 1 and 2, e.g. when replacement of one or both of lenses 1 and 2 is necessary or desirable.

In the illustrated embodiment the free ends of the lower frame members 4 and 5 bent around the upper frame member 3 at either end of the nose bridge 6 forms in addition a nose pad holder 7 for a resilient nose pad 8.

Outside the outer peripheral side edge of each of lenses 1 and 2 free end pieces of the upper frame member 3 and the lower frame members 4 and 5, respectively, are pivotally connected with temple members 9 and 10, respectively, which are formed from the same wire material as the frame members 3 to 5 by means of hinge assemblies generally designated by 11 and 12, respectively,

The design and structural details of the illustrated hinge assemblies 11 and 12 are disclosed in applicants copending European Patent Application entitled "A spectacle frame and a hinge assembly for use therein", the disclosure of which is incorporated herein by reference.

In figs. 4 and 5 an embodiment of the nose pad 8 is shown comprising a pad member 13 with an integral shank portion 14 having a generally rectangular cros-sectional form with two parallel side 15 and 16, in which tracks 17 are formed for engagement with the wire material of the nose pad holder 7.

The supporting structure for the nose pad comprises a loop portion in the form of a hair-needle-like bend 18 of the end of the wire piece forming the nose pad holder 7, said bend including opposed substantially parallel linear wire sections 19 and 20 for engagement with the tracks 17 formed in the opposed parallel sides 15 and 16 of the shank portion 14.

The free end of the wire piece 7 outside the section 19 is bent inwardly towards the section 20 to provide a narrowed introduction passage 21.

Whereas in normal daily use of the spectacles the supporting structure with the loop portion 18 will provide safe retainment of the nose pad 8 against detachment from the spectacle frame, the introduction passage may be relatively easily widened by use of an appropriate tool like e.g. a screw driver to allow insertion and removal of the nose pad.

The invention is not limited, however, to the illustrated rectangular cross-sectional form of the shank portion of the nose pad, but could be implemented by use of any non-circular cross-sectional form of the shank portion providing two substantially parallel opposed sides for tracks for engagement by the wire material of the supporting structure.

## Claims

1. A pair of spectacles with pair of lenses (1, 2) and a spectacle frame of wire material comprising at least one frame member (4, 5) engaging an edge part of each of the lenses (1, 2), a pair of temple members (9, 10) connected with said frame member by a hinge assembly (11, 12), **characterized in that** the shank portion (14) of the nose pad (8) is formed with a non-circular cross-sectional profile comprising two opposed parallel sides (15, 16), in which tracks (17) are formed for engagement with the wire material of the supporting structure, the loop portion (18) of the supporting structure being formed as a hair-needle bend of said wire material comprising two parallel wire sections (19, 20) defining a clearance matching the distance between said parallel sides (15, 16) of the shank portion and narrowed introduction passage in communication with said clearance.

2. A pair of spectacles as claimed in claim 1, comprising an upper frame member (3) common to the pair of lenses (1, 2) and forming a nose bridge 6 therebetween and separate lower frame members (4, 5) engaging lower and inner peripheral edges of each lens (1, 2) and being locked with the upper frame member (3) by end pieces of said lower frame members (4, 5) being bent around said upper frame member (3) at said nose bridge (6), **characterized in that** for each nose pad (8) said supporting structure (7) is formed by the end of a lower frame member (4,5).

3. A resilient nose pad (8) for use in a pair of spectacles as claimed in any of the preceding claims, said nose pad including an integral shank portion (14), **characterized in that** the shank portion (14) of the nose pad (8) is formed with a non-circular cross sectional profile comprising two opposed parallel sides (15, 16), in which tracks (17) are formed for engagement with the wire material of a nose pad supporting structure of the spectacle frame.

4. A nose pad as claimed in claim 3, **characterized in that** said shank portion (14) has a substantially rectangular cross-sectional profile.

5. A nose pad as claimed in any of claims 3 or 4, **characterized in that** the length of said opposed parallel sides (15, 16) of the shank portion (14) is greater than the distance therebetween.
